# EUROPÄISCHE PATENTSCHRIFT

(11) **EP 0 779 468 B1**
(45) Veröffentlichungstag und Bekanntmachung des Hinweises auf die Patenterteilung: **18.12.2002**
(21) Anmeldenummer: 96117664.1
(22) Anmeldetag: 05.11.1996
(51) Int. Cl.: F17C 9/00, F17C 13/04, B60K 15/03, B60K 15/01

(54) **Einrichtung zum Aufbewahren von tiefkaltem verflüssigtem Gas**
Installation for the storage of gas liquified at low temperatures
Installation de stockage d'un gaz liquéfié à basse température

(30) Priorität: 14.12.1995 DE 19546618
(43) Veröffentlichungstag der Anmeldung: 18.06.1997
(73) Patentinhaber: Messer Griesheim GmbH, 65933 Frankfurt am Main (DE); Bayerische Motoren Werke Aktiengesellschaft, 80788 München (DE)
(72) Erfinder: Fieseler, Heinrich, 41541 Dormagen (DE); Hettinger, Wolfgang, 50769 Köln (DE); Lechner, Michael, 40233 Düsseldorf (DE); Ott, Peter, Dr., 63110 Rodgau (DE); Pehr, Klaus, 86391 Stadtbergen (DE); Strobl, Wolfgang, 85072 Eichstätt (DE); Tachtler, Joachim, 85737 Ismaning (DE)

(56) Entgegenhaltungen:
- DE-A- 4 104 766
- DE-B- 1 051 300
- US-A- 2 510 140
- US-A- 3 132 762
- CRYOGENICS, Bd. 32, Nr. 3, 1.Januar 1992, Seiten 327-329, XP000293159 RUDIGER H: "DESIGN CHARACTERISTICS AND PERFORMANCE OF A LIQUID HYDROGEN TANK SYSTEM FOR MOTOR CARS"

## Beschreibung

Die Erfindung betrifft eine Einrichtung zum Aufbewahren von tiefkaltem verflüssigtem Gas nach dem Oberbegriff des Anspruchs 1.

Solche Einrichtungen werden zunehmend als Kryotank zum Aufbewahren von Kryokraftstoffen, wie zum Beispiel Wasserstoff (H₂) oder Erdgas (NG), für Kraftfahrzeuge eingesetzt. Aus Gründen der Speicherkapazität wird der Kryokraftstoff dabei als tiefkaltes verflüssigtes Gas in einem Kryobehälter gespeichert.

Im folgenden werden bei den Bezeichnungen kryogener Gase entsprechend ihrem Aggregatzustand die Buchstaben "G" für "gasförmig" und "L" für "flüssig" bzw. »liquid" vorangestellt, zum Beispiel GH₂ beziehungsweise LH₂ für gasförmigen beziehungsweise flüssigen Wasserstoff.

Die mit Abstand höchsten Speicherdichten werden bei kryogener Speicherung von flüssigem Wasserstoff (= LH₂) erreicht. Mit dieser Speicherung kommt man am ehesten in die Nähe der Speicherleistung konventioneller Kraftstofftanks. Dabei muß der Wasserstoff auf einer Temperatur von 25K gehalten werden, was durch entsprechende Isoliermaßnahmen an den Kryobehältern erreicht wird. Üblicherweise sind die Kryobehälter hierzu als doppelwandige Behälter mit einem zwischen Innen- und Außenbehälter vorgesehenen evakuierten Isolationsraum ausgebildet, in dem Isoliermatten angeordnet sind. Um die Wärmeleitung des tiefkalten verflüssigten Gases auf ein Minimum zu reduzieren, werden Hochvakua von 10⁻³ bis 10⁻⁷ mbar im Isolationsraum erzeugt.

Der im Kryotank gespeicherte flüssige Kryokraftstoff muß den Kraftfahrzeugmotoren als Gas bei 2 bis 4 bar Überdruck zur Verfügung gestellt werden. Die Verdampfung erfolgt dabei in einem Wärmetauscher dem das Motorkühlwasser als Wärmeträger zugeführt wird. Der entsprechende Druck des Kryokraftstoffs wird während des Fahrbetriebes im Inneren des Kryobehälters aufgebaut und gehalten. Hierzu sind unterschiedliche Verfahrensweisen bekannt. Eine bekannte Ausführung besteht im Einbau einer Heizung im Innenbehälter, mittels der ein Teil des flüssigen Kryokraftstoffs verdampft wird. Der gasförmige Kryokraftstoff sammelt sich oberhalb des Flüssigkeitsspiegels im Gasraum des Kryobehälters.

Über Entnahme- und Befülleitungen sowie elektrische Leitungen und im wesentlichen außerhalb des Kryobehälters angeordnete Schaltelemente erfolgt die Kontrolle der Kryokraftstoffströme und der Hilfsgeräte. Zur Reduzierung der Wärmeleitung in den Innenbehälter sind die Entnahme-und Befülleitungen von einem Vakuummantel umgeben und in zum Wärmeabbau geeigneter Länge ausgebildet, bevor sie in den Innenraum eintreten.

Entsprechende Einrichtungen sind zum Beispiel in der DE 195 06 487 A1, der DE 43 20 556 A1, der DE 41 04 711 A1 und der DE 40 41 170 C1 beschrieben.

Aus der US-A 2,510,140 ist ein Kryotank zum Speichern von flüssigem CO₂ unter Druck bekannt. Der Kryotank ist doppelwandig mit einem Innentank und einem diesen umgebenden Außenhülle ausgeführt, wobei der Zwischenraum zwischen Innentank und Außenhülle mit Isolationsmaterial gefüllt ist. CO₂ wird aus Druckgasflaschen über ein Druckreduzierventil in den Kryotank eingespeist. Hierzu ist vom Druckreduzierventil eine Befüllungsleitung in den Kryotank geführt.

In der US-A 3,132,762 ist ein Kryotank zum Speichern kryogener Flüssigkeiten beschrieben, bei dem ein Innenbehälter innerhalb einer Außenhülle angeordnet ist, wobei der Zwischenraum zwischen Innenbehälter und Außenhülle mit Isolationsmaterial gefüllt und evakuiert ist. Aus dem Kryotank herausgeführte Leitungen sind mit Schalt- oder Messelementen verbunden, die von einer Schützhülle umgeben sind.

Die DE-A 41 04 766 beschreibt ein Betankungssystem für ein mit kryogenem Wasserstoff betriebenen Kraftfahrzeug. Hierbei ist ein doppelwandiger Wasserstofftank mit einem evakuierten Isolationsraum vorgesehen. In den Wasserstofftank sind Leitungen hineingeführt, die mit Absperrventilen innerhalb des Isolationsraums versehen sind.

Aus der DE-B 1 051 300 ist eine Vorrichtung zur Entnahme eines verflüssigten Speichergases aus einem Behälter bekannt, der aus einem Innenkessel und einem diesen umgebenden Außenkessel besteht, wobei der Zwischenraum zwischen Innenkessel und Außenkessel eine Zwischenkammer für ein verflüssigtes Kühlgas mit niedrigerem Siedepunkt als das Speichergas aufweist. Die Einlass- und Auslassleitungen aus dem Innenkessel und aus der Zwischenkammer sind zusammen mit Steuer- und Anzeigegeräten in einem Gehäuse untergebracht, das an einem stirnseitigen Endes des Behälters vorgesehen ist.

Eine gattungsgemäße Einrichtung zum Aufbewahren von tiefkaltem, verflüssigtem Gas ist in CRYOGENICS, Bd. 32, Nr. 3, 1. Januar 1992, Seiten 327-329; H. Rüdiger; "Design characteristics and performance of a liquid hydrogen tank system for motor cars" beschrieben. Daraus ist ein Wasserstofftanksystem bekannt, bei dem ein doppelwandiger Kryotank mit Vakuumisolierung - bestehend aus Innenbehälter und Außenbehälter - und eine separate Ventilbox vorgesehen sind. Aus dem Kryotank herausgeführte Leitungen sind mit Schaltelementen versehen, die in der separaten Ventilbox angeordnet sind. Die Ventilbox ist evakuiert und sie kann an dem Außenbehälter nach Art eines Rucksacks befestigt sein. Dieses Dokument stellt den nächstliegenden Stand der Technik gemäß den Merkmalen des Oberbegriffs von Anspruch 1 dar.

Dabei sind Einrichtungen wünschenswert, die im Fahrgastraum - dazu zählt auch der Kofferraum - angeordnet werden können und einen kompakten Aufbau haben, um den Fahrgastraum eines Kraftfahrzeuges nicht wesentlich einzuschränken und die kostengünstig aufgebaut sind.

Der Erfindung liegt daher die Aufgabe zugrunde, eine Einrichtung zum Aufbewahren von tiefkaltem verflüssigtem Gas zu schaffen, die kompakt aufgebaut ist und kostengünstig hergestellt werden kann.

Ausgehend von dem im Oberbegriff von Anspruch 1 genannten Stand der Technik ist diese Aufgabe erfindungsgemäß gelöst mit den im kennzeichnenden Teil dieses Anspruchs angegebenen Merkmalen.

Vorteilhafte Weiterbildungen der Erfindung sind in den Unteransprüchen angegeben.

Durch die Erfindung wird ein kompakter Aufbau der Einrichtung zum Aufbewahren von tiefkaltem verflüssigtem Gas bei einer Installation im Fahrgastraum und bei gleichzeitiger Verringerung der Herstellkosten erreicht.

Dabei werden durch die in den Ansprüchen genannten Merkmale folgende Vorteile im einzelnen erzielt:

Durch die Merkmale der Ansprüche 1 bis 6 sind die Schaltelemente in einer ausreichend dichten und explosionsgeschützten Umhüllung untergebracht die eine Installation im Fahrgastraum, zu dem auch der Kofferraum zählt, ermöglicht. Dadurch daß der Vakuumbehälter mit den Schaltelementen unlösbar direkt mit dem Außenbehälter verbunden ist, werden alle druckgasbeaufschlagten Komponenten der Einrichtung innerhalb des Fahrzeugs mit einem geschlossenen Vakuumraum umgeben, welcher eine sehr hohe Dichtheit besitzt. Manipulationen von unberechtigten Personen sind durch die "in" den Kryobehälter integrierten Schaltelemente ausgeschlossen. Der Vakuumraum erstreckt sich auf die vakuumisolierte Befülleitung, sowie auf die Kraftstoffentnahmeleitung und die Sicherheitsventilleitung mit den Sicherheitsventilen, die den Kryobehälter bei Überdrücken gegen Beschädigung absichern.

Der Vakuumbehälter ist ebenfalls mit einer Vakuumsicherheitsventilleitung mit einem Vakuumsicherheitsventil verbunden. Bei Leckagen an den Befüll- und Entnahmeleitungen strömt das Gas und/oder die Flüssigkeit in den Vakuumraum des Vakuumbehälters. Beim Erreichen eines geringfügigen Überdruckes gegenüber dem Umgebungsdruck öffnet das Vakuumsicherheitsventil und das Abgas wird gefahrlos aus dem Fahrzeuginnenraum geleitet. Der Vakuumbehälter mit den Schaltelementen läßt sich als Modul vorfertigen und an dem Kryobehälter unlösbar befestigen, beispielsweise mit dem Vakuumbehälter verschweißen.

Durch den, dem Außenboden des Kryobehälters vorgelagerten Vakuumbehälter, wird die einfallende Wärme über die von den Schaltelementen zu dem Innenbehälter geführten Befüll- und Entnahmeleitungen und über die Lagerelemente reduziert und dadurch die Isoliergüte verbessert, weil die Leitungsdurchführungen und die Lagerung zwischen Innen- und Außenbehälter als Verlängerung des Weges für die Wärmeeinströmung verantwortlich sind. Bei langen schlanken Behältern mit beidseitigen Vakuumbehältern wird dieser Effekt hinsichtlich der Isoliergüte vergrößert.

Bei einer vorteilhaften Ausgestaltung der erfindungsgemäßen Einrichtung nach den Ansprüchen 7 und 8 wird beim Befüllen des Kryobehälters das tiefkalte verflüssigte Gas bis in den Gasraum des Kryotanks gespritzt. Das fein verteilte tiefkalte verflüssigte Gas bewirkt im Gasraum des Kryobehälters eine Druckabsenkung durch Rekondensation des GH₂ oder GNG. Ein zu hoher Druckanstieg beim Befüllen des Kryobehälters wird so vermieden. Hinzu kommt, daß gleichzeitig über die Befülleitung eine Entnahme aus der Flüssigphase ohne zusätzliche Leitung und mit geringem Schaltungsaufwand erfolgen kann.

Die Zeichnungen veranschaulichen Ausführungsbeispiele der Erfindung.

Es zeigen:
- Figur 1:: eine Gesamtdarstellung des Kryokraftstoffsystems mit der Einrichtung nach der Erfindung in schematischer Darstellung,
- Figur 2:: eine Ausbildung der Einrichtung zum Aufbewahren von tiefkaltem verflüssigten Gas,
- Figur 3:: eine vergrößerte Darstellung A der Steckverbindung gemäß Figur 2,
- Figur 4:: eine vergrößerte Darstellung B der Befüll- und Entnahmeleitung gemäß Figur 2

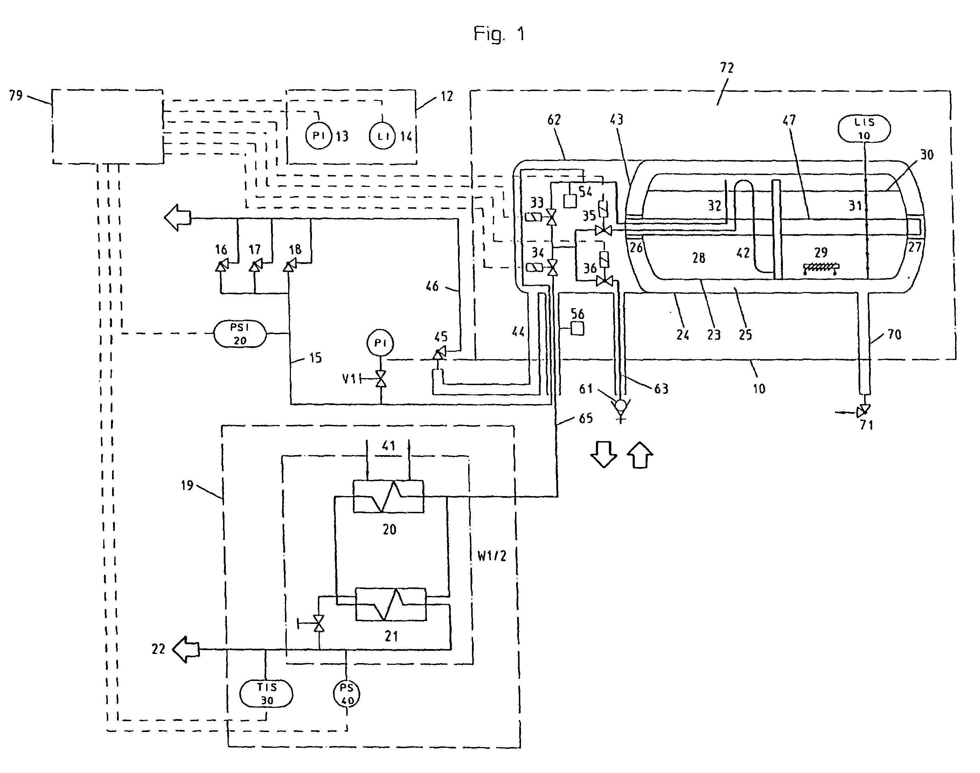

Das in Figur 1 schematisch dargestellte Gesamtschema zeigt im wesentlichen die im Fahrgastraum 72 angeordnete Einrichtung 10 zum Aufbewahren von tiefkaltem verflüssigtem Gas, die im Cockpit 12 vorgesehenen Anzeigen 13, 14, die aus dem Fahrgastraum 72 herausgeführte Sicherheitsventilleitung 15 mit den Sicherheitsventilen 16, 17, 18 und die im Motorraum angeordnete Verdampfereinheit 19 mit den Wärmetauschern 20, 21, deren Ausgang 22 mit dem nicht näher dargestellten Motor eines Kraftfahrzeuges verbunden ist. Die Verdampfereinheit 19 ist in der DE 195 06 487.9 näher beschrieben.

Die Einrichtung 10 besteht aus einem Außenbehälter 24 und einem Innenbehälter 23, der innerhalb des Außenbehälters 24 über Lagerelemente 26, 27 so angeordnet ist, daß zwischen beiden Behältern ein den Innenraum umschließender auf 10⁻³ bis 10⁻⁷ mbar evakuierter Isolationsraum 25 vorhanden ist. Der Isolationsraum 25 ist zusätzlich mit schlecht wärmeleitendem Material, beispielsweise Superisolation, ausgefüllt. In dem Innenbehälter wird das tiefkalte verflüssigte Gas 28 aufbewahrt, während der Außenbehälter der Umgebungstemperatur von beispielsweise 20°C ausgesetzt ist. In dem Innenbehälter 23 ist im tiefkalten verflüssigten Gas 28 eine Widerstandsheizung 29 angeordnet. Mit der Widerstandsheizung 29 wird zum Druckaufbau ein Teil des tiefkalten verflüssigten Gases 28 verdampft. Das verdampfte Gas strömt durch das tiefkalte verflüssigte Gas 28 in den Gasraum 30. Über einen im Innenbehälter 23 angeordneten Sensor, 31, beispielsweise eine Widerstandskette oder ein Schwimmer, wird der Füllstand des tiefkalt verflüssigten Gases 28 im Innenbehälter 23 erfaßt und im Cockpit 12 über die Anzeige 14 visualisiert. Aus Übersichtsgründen sind die mit der Heizung 29 und dem Sensor 31 verbundenen elektrischen Leitungen in Figur 1 nicht näher dargestellt.

Über Leitung 32 wird gasförmiger Kryokraftstoff aus dem Gasraum 30 des Innenbehälters 23 zu außerhalb des Außenbehälters 24 angeordneten Schaltelementen 33, 34 geführt. Das Ende der Leitung 32 ist hierzu im Gasraum 30 des Kryobehälters angeordnet. Leitung 42, deren Ende im tiefkalten verflüssigten Gas 28 angeordnet ist, verläuft durch den Isolationsraum 25 zu außerhalb des Außenbehälters 24 angeordneten Schaltelementen 34, 35, 36. Über die Leitung 32 wird GH₂ beziehungsweise GNG und über die Leitung 42 LH₂ beziehungsweise LNG dem Wärmetauscher 20 der Verdampfereinheit 19 zugeführt. Dem Wärmetauscher 20 wird als Wärmemittel das Motorkühlwasser im Kreislauf 41 zugeführt und damit das LH₂ beziehungsweise LNG verdampft. Das verdampfte GH₂ beziehungsweise GNG durchströmt den zweiten Wärmetauscher 21 dem LH₂ beziehungsweise LNG über eine Abzweigleitung als Kältemittel zugeführt wird. Das so abgekühlte GH₂ beziehungsweise GNG sowie das im zweiten Wärmetauscher 21 verdampfte Kältemittel strömt über einen Ausgang 22 zu dem Motor.

Die Steuermittel 33 bis 36 sind in mindestens einem Vakuumbehälter 62 angeordnet der bevorzugt an einem Außenboden 43 oder beiden Außenböden des Außenbehälters 24 befestigt ist. Der Außenboden 43 des Außenbehälters 24 begrenzt dabei eine Seite des Vakuumbehälters 62. Der Vakuumraum des Vakuumbehälters 62 ist auf kleiner 10⁻¹ mbar evakuiert und erstreckt sich bis außerhalb des Fahrgastraumes 72 auf die vakuumisolierte Befüll- und Entnahmeleitung 63, 65 und die Sicherheitsventilleitung 15. Über eine Vakuumleitung 44 ist der Vakuumbehälter 62 außerhalb des Fahrgastraumes 72 mit einem Vakuumsicherheitsventil 45 verbunden. Bei Leckagen an den Leitungen 32, 42 strömt das kryogene Gas in den Vakuumraum des Vakuumbehälters 62. Erreicht der Vakuumraum des Vakuumsbehälters 62 einen geringfügigen Überdruck gegenüber dem Umgebungsdruck öffnet das Vakuumsicherheitsventil 45 und das Abgas wird über Leitung 46 gefahrlos aus dem Fahrgastraum 72 geleitet. Zur Sicherung des Außenbehälters 24 gegen Druckanstieg in dem Isolationsraum 25 ist eine mit dem Isolationsraum 25 verbundene Vakuumleitung 70 aus dem Fahrgastraum 72 herausgeführt und außerhalb des Fahrgastraumes 72 mit einem Vakuumsicherheitsventil 71 verbunden.

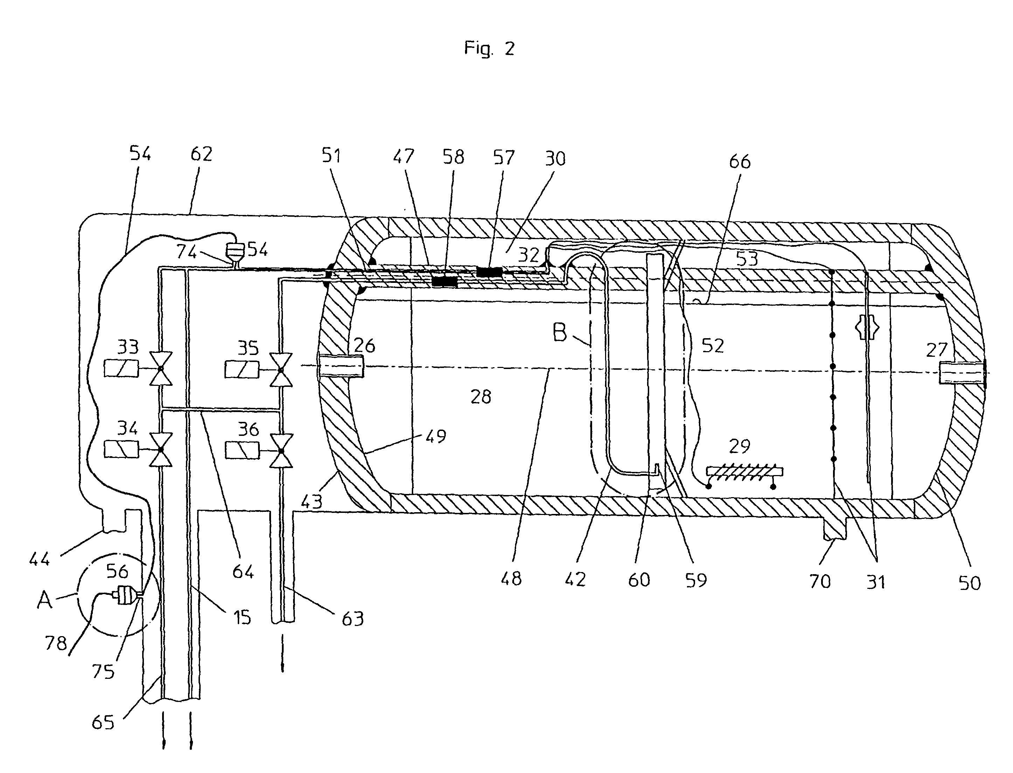

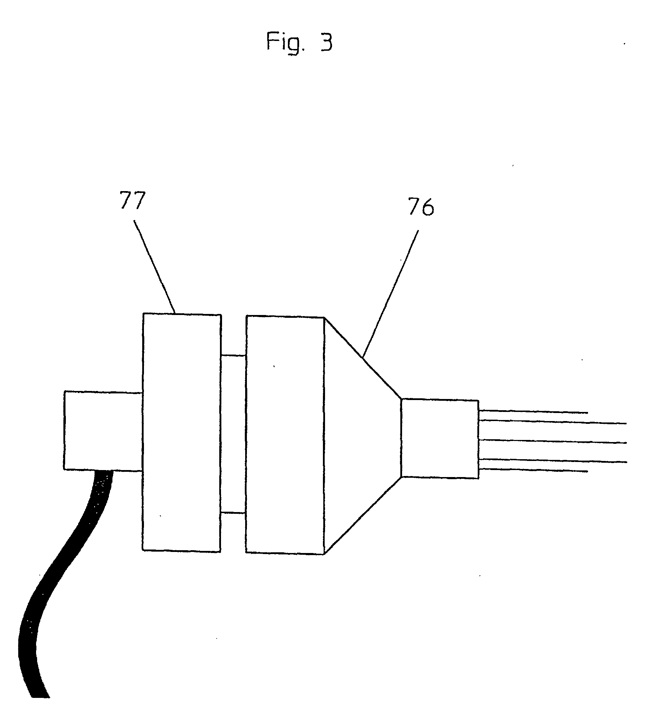

In Figur 2 ist eine Ausbildung der Einrichtung 10 vergrößert dargestellt. Für gleiche Bauteile werden gleiche Bezugszeichen verwendet. Wie Figur 2 zeigt, sind die Leitung 42 und die mit ihrem Ende in den Gasraum 30 mündende Leitung 32 in einem Schutzrohr 47 angeordnet, welches koaxial und/oder konzentrisch zur Längsachse 48 des Kryobehälters verläuft. Das Schutzrohr 47 ist mit den beiden Innenböden 49, 50 des Innenbehälters unlösbar verbunden, vorzugsweise verschweißt. Der innenraum des Schutzrohres 47 steht über die Öffnung 51 mit dem Isolationsraum 25 in Verbindung. Die Leitungen 32, 42 treten mit ihrem einen Ende durch im Schutzrohr 47 vorgesehene Bohrungen in den Innenbehälter 23. Die Leitungen 32 und 42 sind mit dem Schutzrohr 47 gasdicht verschweißt. Über die Rohröffnung 51 treten die Leitungen 32, 42 mit ihrem anderen Ende in den Isolationsraum 25 und über mindestens eine Leitungsdurchführung, beispielsweise Bohrungen, durch den Außenboden 43 des Kryobehälters in den Vakuumbehälter 62. Die Leitungen 32, 42 sind gasdicht mit dem Außenboden 43 verschweißt. Bei der zentrischen Anordnung des Schutzrohres 47 (Figur 1) verlaufen die Leitungen 32, 42 vorteilhaft durch die Lagerelemente 26, 27, was die Isolierung des Isolationsraumes 25 mit Superisolation vereinfacht. In der gasführenden Leitung 32 werden die elektrischen Leitungen 52, 53 bis in den Vakuumraum des Vakuumbehälters 62 geführt. Über die Leitungsdurchführung 75 treten die elektrischen Leitungen aus der gasführenden Leitung 32 aus und in die erste Steckverbindung 54 ein. Die elektrische Steckverbindung 54 ist im Vakuumbehälter 62 angeordnet. Über eine Verbindungsleitung 55 ist die Steckverbindung 54 an eine außerhalb des Vakuumbehälters 62 angeordnete zweite elektrische Steckverbindung 56 angeschlossen. Die zweite Steckverbindung 56 verschließt die Leitungsdurchführung 75 für die Verbindungsleitung 55. Wie Figur 3 zeigt, bestehen die Steckverbindungen 54, 56 aus einer Steckdose 76 und einem Stecker 77, die miteinander verbindbar sind. Über eine Leitung 78 ist die Steckverbindung 56 mit der Steuerungseinheit 79 (Figur 1) verbunden. Innerhalb des Vakuumsraumes des Vakuumbehälters 62 können die Schaltelemente 33 bis 36 und die Steckverbindungen 54, 56 als nicht explosionsgeschützte Bauteile ausgebildet werden, da aufgrund der Konstruktion beim gleichzeitigen Auftreten von zwei Fehlern Innenleck, Außenleck und Zündfunke keine Explosion erfolgen kann.

In den Leitungen 32 und 42 sind Kompensatoren 57, 58 angeordnet, mittels denen ein Längenausgleich der Leitungen 32, 42 kompensiert wird. Als Kompensatoren können beispielsweise metallische Faltenbälge angeordnet werden.

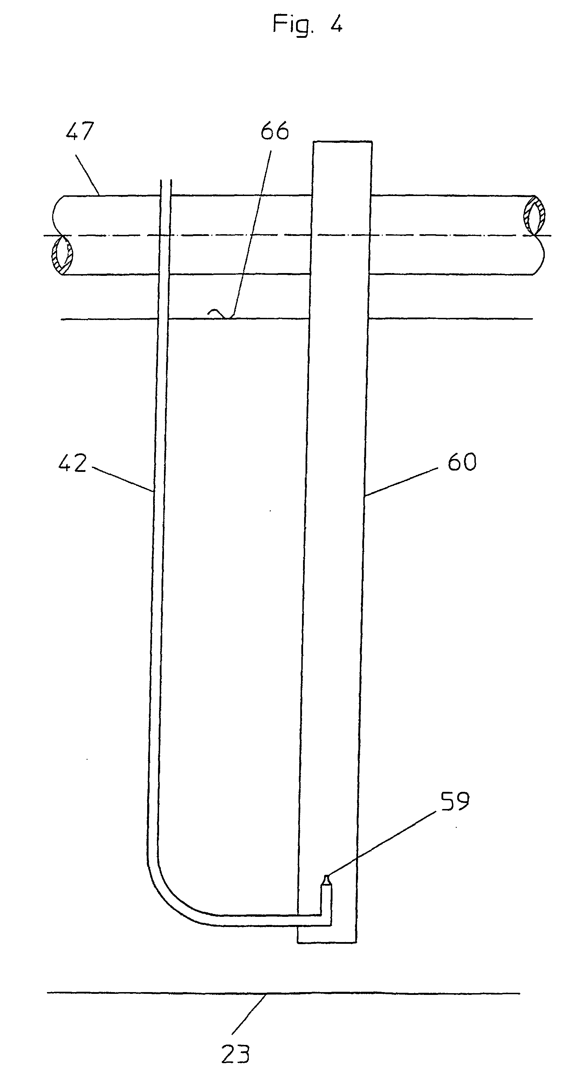

Figur 4 zeigt eine vergrößerte Darstellung der Leitung 42, die mit ihrem Ende mit zum Gasraum 30 gerichteter Öffnung 59 in dem tiefkalt verflüssigten Gas 28 angeordnet ist. Die Öffnung 59 ist von einem über den Flüssigkeitsspiegel 66 des tiefkalten verflüssigten Gases 28 in den Gasraum 30 hineinragende Rohr 60 umgeben. Die Öffnung 59 der Leitung 42 ist als Düse, vorzugsweise als Lavaldüse, ausgebildet, so daß beim Befüllen des Innenbehälters 23 mit tiefkalten verflüssigten Gas über die Kryokupplung 61 und die Befülleitung 63 bei geöffneten Ventilen 35 und 36 das tiefkalte verflüssigte Gas als Druckstrahl in den Gasraum 30 spritzt. Der Druckstrahl trifft auf die Wand des Innenbehälters 23 und zuerfällt in Tropfen. Durch die fein verteilten tiefkalten verflüssigten Gastropfen rekondensiert das im Gasraum befindliche kryogene Gas. Dies führt zum Druckabbau während des Betankvorganges.

In der gasführenden Leitung 32 und in der Leitung 42 sind jeweils zwei hintereinander geschaltete Ventile 33, 34 beziehungsweise 35, 36 angeordnet. Zwischen den mittels elektrischer Signale ansteuerbaren Ventilen 33 und 34 beziehungsweise 35 und 36 ist eine die beiden Leitungen 32 und 42 verbindende Verbindungsleitung 64 angeordnet. Bei der Entnahme des tiefkalten verflüssigten Gases 28 über die Leitung 42 strömt das LH₂ beziehungsweise LNG bei geöffnetem Ventil 35 und geöffnetem Ventil 34 über Verbindungsleitung 64 zu der Entnahmeleitung 65, die mit der Verdampfereinheit 19 verbunden ist. Ventil 36 ist bei der Entnahme geschlossen. Bei geöffneten Ventilen 33 und 34 strömt GH₂ oder GNG zu der Verdampfereinheit 19. Die Ventile 35 und 36 sind bei der Entnahme eines Gases geschlossen. GH₂ beziehungsweise GNG wird dem Motor 22 nach längeren Stillstandzeiten des Fahrzeuges zum Druckabbau im Innenbehälter zugeführt. Die in Figur 2 dargestellten Schaltelemente 33 bis 36 werden über die Steuerungseinheit 79, beispielsweise eine SPS-Steuerung oder einen Mikro-Prozessor, so geschaltet, daß eine Entnahme aus der Gasphase beziehungsweise Flüssigphase im Fahrbetrieb stattfindet.

## Patentansprüche

1. Einrichtung zum Aufbewahren von tiefkaltem verflüssigtem Gas, insbesondere Kryotank zum Aufbewahren von Kryokraftstoffen, mit einem Außenbehälter (24) und einem Innenbehälter (23), der innerhalb des Außenbehälters (24) so angeordnet ist, daß zwischen beiden Behältern (23; 24) ein den Innenraum umschließender evakuierter Isolationsraum (25) vorhanden ist, durch den im Innenbehälter (23) angeordnete Leitungen (32; 42) zu außerhalb des Außenbehälters (24), in einem mit dem Außenbehälter (24) verbundenen Vakuumbehälter (62) angeordneten Schaltelementen (33; 34; 35; 36) geführt sind,
**dadurch gekennzeichnet**
**daß** der Vakuumbehälter (62) mit dem Außenbehälter (24) unlösbar verbunden ist, wobei eine Behälterwand (43) des Außenbehälters (24) den Vakuumbehälter (62) begrenzt und die Leitungen (32, 42) durch diese Behälterwand geführt sind.

2. Einrichtung nach Anspruch 1,
**dadurch gekennzeichnet,**
**daß** der Vakuumbehälter (62) mit einer Vakuumsicherheitsventilleitung (44) verbunden ist, an der mindestens ein Vakuumsicherheitsventil (45) angeordnet ist.

3. Einrichtung nach Anspruch 1 oder 2,
**dadurch gekennzeichnet,**
**daß** die den Vakuumbehälter (62) begrenzende Behälterwand (43) ein Boden des Außenbehälters (24) ist und der Vakuumbehälter (62) mit dem Außenbehälter (24) verschweißt ist.

4. Einrichtung nach einem der Ansprüche 1 bis 3,
**dadurch gekennzeichnet,**
**daß** mindestens zwei Leitungen (32, 42) in den Vakuumbehälter (62) geführt sind, wobei das Ende der einen Leitung (32) mit dem Gasraum (30) und das Ende der anderen Leitung (42) mit dem tiefkalten verflüsssigten Gas (28) des Innenbehälters in Verbindung steht, und in jeder Leitung (32, 42) zwei hintereinander geschaltete Ventile (33, 34 beziehungsweise 35, 36) im Vakuumbehälter (62) angeordnet sind, zwischen denen eine Verbindungsleitung (64) die Leitungen (32, 42) miteinander verbindet.

5. Einrichtung nach einem der Ansprüche 1 bis 4,
**dadurch gekennzeichnet,**
**daß** innerhalb der gasführenden Leitung (32) elektrische Leitungen (52, 53) für die im Innenbehälter angeordneten Sensoren (31), Geräte (29) u.dgl. angeordnet und bis in den Vakuumbehälter (62) geführt sind, die über eine Leitungsdurchführung (74) aus der gasführenden Leitung (32) aus- und in den Vakuumraum (62) eintreten.

6. Einrichtung nach einem der Ansprüche 1 bis 5,
**dadurch gekennzeichnet**
**daß** die elektrischen Leitungen (52, 53) mit einer im Vakuumbehälter (62) angeordneten Steckverbindung (54) verbunden sind und über eine Verbindungsleitung (55) an eine außerhalb des Vakuumbehälters (62) angeordnete elektrische Steckverbindung (56) angeschlossen sind.

7. Einrichtung nach einem der Ansprüche 1 bis 6,
**dadurch gekennzeichnet,**
**daß** eine Leitung (42) als Entnahme-und Befüllleitung (63, 65) für das tiefkalte verflüssigte Gas (28) ausgebildet ist, deren Ende mit zum Gasraum (30) gerichteter Öffnung (59) in dem tiefkalten verflüssigten Gas (28) angeordnet ist und daß die Öffnung (59) von einem in den Gasraum (30) hineinragenden Rohr (60) umgeben ist.

8. Einrichung nach Anspruch 7
**dadurch gekennzeichnet**
**daß** die Öffnung (59) als Düse ausgebildet ist.

## Claims

1. Device for storing cryogenic liquefied gas, in particular cryotank for storing cryofuels, having an outer vessel (24) and an inner vessel (23), which is arranged inside the outer vessel (24) in such a way that an evacuated insulation space (25), which surrounds the interior space, is present between the two vessels (23; 24), through which insulation space lines (32; 42) which are arranged in the inner vessel (23) are guided to switching elements (33; 34; 35; 36) arranged outside the outer vessel (24), in a vacuum vessel (62) connected to the outer vessel (24), **characterized in that** the vacuum vessel (62) is non-releasably connected to the outer vessel (24), a vessel wall (43) of the outer vessel (24) delimiting the vacuum vessel (62), and the lines (32, 42) being guided through this vessel wall.

2. Device according to Claim 1, **characterized in that** the vacuum vessel (62) is connected to a vacuum safety-valve line (44), at which at least one vacuum safety valve (45) is arranged.

3. Device according to Claim 1 or 2, **characterized in that** the vessel wall (43) which delimits the vacuum vessel (62) is a base of the outer vessel (24), and the vacuum vessel (62) is welded to the outer vessel (24).

4. Device according to one of Claims 1 to 3, **characterized in that** at least two lines (32, 42) are guided into the vacuum vessel (62), the end of one line (32) being in communication with the gas chamber (30) and the end of the other line (42) being in communication with the cryogenic liquefied gas (28) in the inner vessel, and two valves (33, 34 and 35, 36, respectively), which are connected in series, being arranged in each line (32, 42) inside the vacuum vessel (62), between which valves a connecting line (64) connects the lines (32, 42) to one another.

5. Device according to one of Claims 1 to 4, **characterized in that** electrical lines (52, 53) for the sensors (31), apparatus (29) and the like arranged in the inner vessel are arranged within the gas-carrying line (32) and lead into the vacuum vessel (62), and these lines emerge from the gas-carrying line (32) via a line lead-through (74) and enter the vacuum space (62).

6. Device according to one of Claims 1 to 5, **characterized in that** the electrical lines (52, 53) are connected to a plug connection (54) arranged in the vacuum vessel (62) and are connected via a connecting line (55) to an electrical plug connection (56) arranged outside the vacuum vessel (62).

7. Device according to one of Claims 1 to 6, **characterized in that** a line (42) is designed as a removal and filling line (63, 65) for the cryogenic liquefied gas (28), and its end is arranged with an opening (59), which is directed towards the gas chamber (30), in the cryogenic liquefied gas (28), and **in that** the opening (59) is surrounded by a pipe (60) which projects into the gas chamber (30).

8. Device according to Claim 7, **characterized in that** the opening (59) is designed as a nozzle.

## Revendications

1. Installation pour stocker du gaz liquéfié à basse température notamment un réservoir cryogénique pour stocker des carburants cryogéniques, comprenant un réservoir extérieur (24) et un réservoir intérieur (23) placé dans le réservoir extérieur (24) et l'espace intérieur compris entre les deux réservoirs (23, 24) est un espace d'isolation (25) sous vide, traversé par des conduites (32, 42) prévues dans le réservoir intérieur (23) pour arriver dans le réservoir extérieur (24) et des éléments de commutation (33, 34, 35, 36) prévus dans un réservoir sous vide (62) relié au réservoir extérieur (24),
**caractérisée en ce que**
le réservoir sous vide (62) est relié de manière solidaire au réservoir extérieur (24), une paroi de réservoir (43) du réservoir extérieur (24) limite le réservoir sous vide (62) et des conduites (32, 42) traversent cette paroi de réservoir.

2. Installation selon la revendication 1,
**caractérisée en ce que**
le réservoir sous vide (62) est relié à une conduite de soupape de sécurité de vide (44) munie d'au moins une soupape de sécurité sous vide (45).

3. Installation selon l'une quelconque des revendications 1 ou 2,
**caractérisée en ce que**
la paroi de réservoir (43) qui délimite le réservoir sous vide (62) est le fond du réservoir extérieur (24) et le réservoir sous vide (62) est soudé au réservoir extérieur (24).

4. Installation selon l'une quelconque des revendications 1 à 3,
**caractérisée en ce qu'**
au moins deux conduites (32, 42) arrivent dans le réservoir sous vide (62), l'extrémité d'une conduite (32) communiquant avec la phase gazeuse (30) et l'extrémité de l'autre conduite (42) communiquant avec le gaz liquéfié à basse température (28) du réservoir intérieur, et chaque conduite (32, 42) comporte deux soupapes l'une derrière l'autre (33, 34 ou 35, 36) dans le réservoir sous vide (62) entre lesquelles une conduite de liaison (64) relie les conduites (32, 42).

5. Installation selon l'une quelconque des revendications 1 à 4,
**caractérisée par**
des lignes électriques (52, 53) à l'intérieur de la conduite de gaz (32), ces lignes étant prévues pour des capteurs (31) des appareils (29) ou analogues prévus à l'intérieur du réservoir intérieur et ces lignes arrivent jusqu'au réservoir sous vide (62) pour passer par un passage de ligne (74) de la conduite de gaz (32) et arriver dans la chambre sous vide (62).

6. Installation selon lune quelconque des revendications 1 à 5,
**caractérisée en ce que**
les lignes électriques (52, 53) sont reliées à une connexion (54) prévue dans un réservoir sous vide (62) et une ligne de liaison (55) pour être raccordée à une connexion électrique (56) prévue à l'extérieur du réservoir sous vide (62).

7. Installation selon l'une quelconque des revendications 1 à 6,
**caractérisée en ce qu'**
une ligne (42) est réalisée comme conduite de prélèvement et de remplissage (63, 65) du liquide refroidi à basse température (28), une extrémité comportant une ouverture (59) dirigée vers l'espace de gaz (30) dans le gaz liquéfié à basse température (28), et l'ouverture (59) est entourée par un tube (60) arrivant dans la phase gazeuse (30).

8. Installation selon la revendication 7,
caractérisée ce que
l'ouverture (59) est en forme de buse.
